# EUROPEAN PATENT APPLICATION

(11) **EP 3 636 468 A1**
(43) Date of publication of application: **15.04.2020**
(21) Application number: 18813560.2
(22) Date of filing: 07.06.2018
(51) Int. Cl.: B60H 1/00

(54) **VEHICULAR AIR-CONDITIONING APPARATUS AND FRAME BODY TO BE APPLIED THERETO**

(30) Priority: 09.06.2017 JP 2017114620
(71) Applicant: Valeo Japan Co., Ltd., Saitama 360-0193 (JP)
(72) Inventor: ARAKI, Daisuke, Kumagaya-shi Saitama 360-0193 (JP); SHICHIKEN, Yutaka, Kumagaya-shi Saitama 360-0193 (JP); YOSHIZAKI, Hisayoshi, Kumagaya-shi Saitama 360-0193 (JP)
(74) Representative: Tran, Chi-Hai
(86) International application number: PCT/JP2018/021830
(87) International publication number: WO 2018/225814

(57) **Abstract**

The disclosure has an object of providing a vehicle-use air conditioning device, and a frame body applied thereto, such that installation in an erroneous position is prevented even when the vehicle-use air conditioning device includes a multiple of heating heat exchangers. A vehicle-use air conditioning device 1 according to the invention is a vehicle-use air conditioning device including a case 10 having in an interior thereof an air passage 11 along which an airflow is caused to flow, and a multiple of heating heat exchangers 5A and 5B disposed in series with respect to the airflow, wherein the heating heat exchangers are housed in a housing portion 21 provided in one frame body 20, the case has an installation/removal port 12 for installing and removing the frame body 20 in a side face 13 of the case, the frame body can be freely installed in and removed from the case while holding the heating heat exchangers, and a form of at least either one side face 22a or 22b of side faces opposing in a direction of installation in and removal from the case of the frame body coincides with a form of the installation/removal port, and is asymmetrical in directions of rotation having an up-down direction of the case, a front-rear direction of the case, and a left-right direction of the case as axes.

## Description

### Technical Field

The present disclosure relates to a frame body disposed in an air passage of a vehicle-use air conditioning device after a heating heat exchanger is housed in an interior, and to a vehicle-use air conditioning device in which the frame body is disposed.

### Background Art

A frame body (also called a cassette or an adaptor) disposed in an air passage of a vehicle-use air conditioning device after a heating heat exchanger is housed in an interior, and a vehicle-use air conditioning device in which the frame body is disposed, have been disclosed (for example, refer upperatent Document 1) . In Patent Document 1, it is disclosed that a frame body (cassette) is inserted into an insertion body 3 provided in a vehicle-use air conditioning device after a heating heat exchanger is housed in the frame body, and that a multiple of heating heat exchangers of differing sizes are each housed in frame bodies (cassettes) of the same external dimensions, whereby upstream and downstream positions of the heat exchangers can easily be changed.

### Citation List

### Patent Literature

Patent Document 1: JP-A-2013-010500

### Summary of Invention

### Technical Problem

However, the technology shown in Patent Document 1 is such that as one heating heat exchanger is housed in one frame body, and moreover, external forms of each frame body are the same, there is concern that differing heating heat exchangers will be installed in erroneous positions.

The disclosure has an object of providing a vehicle-use air conditioning device, and a frame body applied thereto, such that installation in an erroneous position is prevented even when the vehicle-use air conditioning device includes a multiple of heating heat exchangers.

### Solution upperroblem

A vehicle-use air conditioning device according to the invention is a vehicle-use air conditioning device including a case having in an interior thereof an air passage along which an airflow is caused to flow, and a multiple of heating heat exchangers disposed in series with respect to the airflow, and is characterized in that the heating heat exchangers are housed in a housing portion provided in one frame body, the case has an installation/removal port for installing and removing the frame body in a side face of the case, the frame body can be freely installed in and removed from the case while holding the heating heat exchangers, and a form of at least either one side face of side faces opposing in a direction of installation in and removal from the case of the frame body coincides with a form of the installation/removal port, and is asymmetrical in directions of rotation having an up-down direction of the case, a front-rear direction of the case, and a left-right direction of the case as axes.

The vehicle-use air conditioning device according to the invention is preferably such that the multiple of heating heat exchangers are such that forms of side faces of the heating heat exchangers opposing in a direction of insertion in the frame body differ from each other. Erroneous installation of the heating heat exchangers in the frame body can be prevented.

The vehicle-use air conditioning device according to the invention is preferably such that either one of the side faces opposing in the direction of installation in and removal from the case of the frame body has a multiple of apertures for housing each of the heating heat exchangers in the housing portion, and has a form that encloses a whole of the multiple of apertures. The frame body can be further reduced in size, and an aperture area of the installation/removal port of the case can be reduced.

The vehicle-use air conditioning device according to the invention is preferably such that the frame body has a first ridge portion on a side face extending in a direction of installation in and removal from the case, and one end face of the first ridge portion is above, of side faces opposing in the direction of installation in and removal from the case of the frame body, the side face on a rear side in the direction of insertion in the case. The installation/removal port provided in the case can be blocked with a side face of the frame body.

The vehicle-use air conditioning device according to the invention is preferably such that another end face of the first ridge portion is above, of the side faces opposing in the direction of installation in and removal from the case of the frame body, the side face on a front side in the direction of insertion in the case. An appropriate installation orientation of the frame body can be confirmed at an initial step of an operation of inserting the frame body in the case.

The vehicle-use air conditioning device according to the invention is preferably such that the other end face of the first ridge portion is between the two side faces opposing in the direction of installation in and removal from the case of the frame body, the frame body further has a second ridge portion on a side face on which the first ridge portion is provided, and one end face of the second ridge portion is above, of the side faces opposing in the direction of installation in and removal from the case of the frame body, the side face on the front side in the direction of insertion in the case. An appropriate installation orientation of the frame body can be confirmed at an initial step of an operation of inserting the frame body in the case.

The vehicle-use air conditioning device according to the invention is preferably such that the frame body has a second ridge portion on a side face extending in a direction of installation in and removal from the case, and another end face of the second ridge portion is above, of side faces opposing in the direction of installation in and removal from the case of the frame body, the side face on a front side in the direction of insertion in the case. An appropriate installation orientation of the frame body can be confirmed at an initial step of an operation of inserting the frame body in the case.

The vehicle-use air conditioning device according to the invention is preferably such that the heating heat exchangers are not housed in one portion of the housing portion, and the aperture of the housing portion is blocked by a cover body. Even when quantities of the installed heating heat exchangers differ, the case and the frame body can be used for both.

A frame body according to the invention is characterized by being applied to the vehicle-use air conditioning device according to the invention.

### Advantageous Effects of Invention

According to the disclosure, a vehicle-use air conditioning device, and a frame body applied thereto, such that installation in an erroneous position is prevented even when the vehicle-use air conditioning device includes a multiple of heating heat exchangers, can be provided.

### Brief Description of Drawings

[Fig. 1] Fig. 1 is a schematic view showing an example of a vehicle-use air conditioning device according to an embodiment.
[Fig. 2] Fig. 2 is a schematic view showing a first example of an installation/removal port of a frame body and a case.
[Fig. 3] Fig. 3 is a schematic view showing a second example of an installation/removal port of a frame body and a case.
[Fig. 4] Fig. 4 is a perspective view showing an example of the frame body shown in Fig. 3.
[Fig. 5] Fig. 5 is a perspective view showing another example of the frame body shown in Fig. 3.
[Fig. 6] Fig. 6 is a schematic view showing a third example of an installation/removal port of a frame body and a case. Description of Embodiments

Hereafter, an aspect of the invention will be described with reference to the attached drawings. An embodiment described hereafter is a working example of the invention, and the invention is not limited to the following embodiment. Components having the same reference signs in the specification and the drawings are components identical to each other. Various form changes may be carried out, provided that an advantage of the invention is achieved.

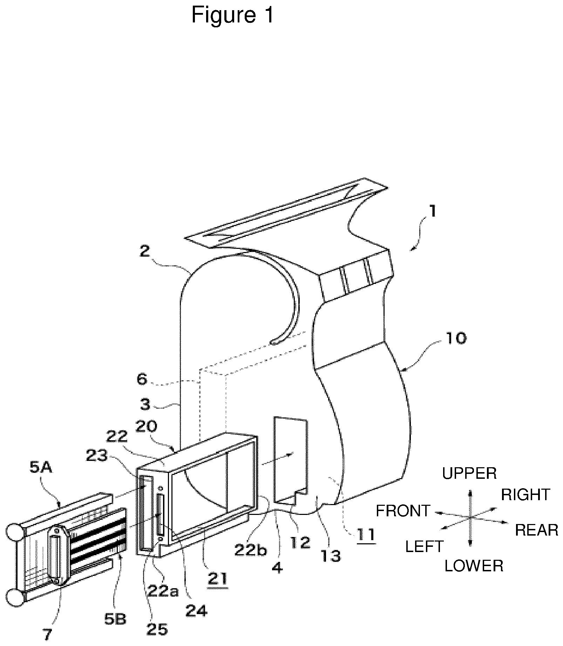

Fig. 1 is a schematic view showing an example of a vehicle-use air conditioning device according to the embodiment. A vehicle-use air conditioning device 1 according to the embodiment is a vehicle-use air conditioning device that includes a case 10 having in an interior thereof an air passage 11 along which an airflow is caused to flow, and a multiple of heating heat exchangers 5A and 5B disposed in series with respect to the airflow, wherein the heating heat exchangers 5A and 5B are housed in a housing portion 21 provided in one frame body 20, the case 10 has an installation/removal port 12 for installing and removing the frame body 20 in a side face 13 of the case 10, the frame body 20 can be freely installed in and removed from the case 10 while holding the heating heat exchangers 5A and 5B, and a form of at least either one side face of side faces opposing in the direction of installation in and removal from the case 10 of the frame body 20 coincides with a form of the installation/removal port 12, and is asymmetrical in directions of rotation having an up-down direction of the case 10, a front-rear direction of the case 10, and a left-right direction of the case 10 as axes.

The vehicle-use air conditioning device 1 has a blower unit 2, a cooler unit 3, and a heater unit 4, forms an airflow of an appropriate temperature, and blows the airflow out into a vehicle interior. The blower unit 2 selectively takes in air from the vehicle interior and exterior, and causes the air to flow downstream. The cooler unit 3 is disposed upstream of the heater unit 4, and has a cooling heat exchanger 6. The cooling heat exchanger 6 dehumidifies and cools air as necessary. The heater unit 4 has the heating heat exchangers 5A and 5B. The heating heat exchangers 5A and 5B heat air that has passed through the cooling heat exchanger 6 as necessary, thereby forming temperature-regulated air. The temperature-regulated air is blown out into the vehicle interior from a necessary blowout port, thereby conditioning air in the vehicle interior.

The case 10 forms an outline of the blower unit 2, the cooler unit 3, and the heater unit 4, and is a housing that integrates the blower unit 2, the cooler unit 3, and the heater unit 4. The air passage 11 is formed in an internal space of the case 10. The installation/removal port (first installation/removal port) 12 for installing and removing the frame body 20 is provided in the side face 13 of the case 10. The first installation/removal port 12 is a through hole that communicates with the air passage 11. The first installation/removal port 12 is preferably provided in, of side faces of the case 10, the side face 13 (shown in Fig. 1), which is disposed on a left side of a vehicle, or a side face (not shown) disposed on a right side. When the vehicle is a right-hand drive vehicle, the first installation/removal port 12 is preferably provided in the side face 13 disposed on the left side of the vehicle. Also, when the vehicle is a left-hand drive vehicle, the first installation/removal port 12 is preferably provided in the side face disposed on the right side of the vehicle. As a space for work of installing and removing the frame body 20 is easily secured, maintainability improves.

The heating heat exchangers 5A and 5B are, for example, the hot water type heating heat exchanger 5A, the electrical heat generating type heating heat exchanger 5B, or a refrigerant type heating heat exchanger (not shown) . The hot water type heating heat exchanger 5A has engine cooling water warmed by engine-generated heat as a heating medium, and heats air by causing an exchange of heat between the engine cooling water and the air. The electrical heat generating type heating heat exchanger 5B is, for example, a PTC heater, and heats air by causing the air upperass through an electrically heated heater element. The refrigerant type heating heat exchanger is, for example, a heat pump cycle condenser, has a refrigerant as a heating medium, and heats air by causing an exchange of heat between the refrigerant and the air.

The multiple of heating heat exchangers 5A and 5B are disposed in series with respect to the airflow. Being disposed in series with respect to the airflow means that ventilation faces of all the heating heat exchangers 5A and 5B are disposed so as to intersect the airflow. The multiple of heating heat exchangers 5A and 5B are preferably disposed so that the ventilation faces thereof are parallel to each other. The case 10 can be rendered more space-saving.

A form wherein there are two heating heat exchangers 5A and 5B is shown as an example in Fig. 1, but the invention not being limited to this, there may be three or more heating heat exchangers. Also, not being particularly limited, a combination of the multiple of heating heat exchangers 5A and 5B is, for example, a combination of the hot water type heating heat exchanger 5A and the electrical heat generating type heating heat exchanger 5B (shown in Fig. 1), a combination of the hot water type heating heat exchanger 5A and the refrigerant type heating heat exchanger (not shown), a combination of the refrigerant type heating heat exchanger and the electrical heat generating type heating heat exchanger 5B (not shown), or a combination of the hot water type heating heat exchanger 5A, the refrigerant type heating heat exchanger, and the electrical heat generating type heating heat exchanger 5B (not shown), along the flow of the airflow.

In the vehicle-use air conditioning device 1 according to the embodiment, the multiple of heating heat exchangers 5A and 5B are preferably such that forms of side faces of the heating heat exchangers 5A and 5B opposing in the direction of insertion in the frame body 20 differ from each other. Erroneous installation of the heating heat exchangers 5A and 5B in the frame body 20 can be prevented by forms of apertures 23 and 24, provided in the frame body 20, for inserting the heating heat exchangers 5A and 5B in the housing portion 21 being caused to coincide one each with the forms of the side faces of the heating heat exchangers 5A and 5B opposing in the direction of insertion in the frame body 20.

The frame body 20 according to the embodiment is applied to the vehicle-use air conditioning device 1 according to the embodiment. The frame body 20 has the housing portion 21 and a peripheral wall portion 22. The housing portion 21 is a space that can house the multiple of heating heat exchangers 5A and 5B, and is opened in a face opposing the direction of the airflow so as not to hinder ventilation in the heating heat exchangers 5A and 5B. The peripheral wall portion 22 is a frame that encloses the housing portion 21, and has an external form that can be inserted into the first installation/removal port 12. More preferably, the external form of the peripheral wall portion 22 coincides with the form of the first installation/removal port 12. The apertures 23 and 24 for inserting the heating heat exchangers 5A and 5B in the housing portion 21 are provided in at least one of side faces 22a of the peripheral wall portion 22 opposing in the direction of installation in and removal from the case 10. The apertures 23 and 24 are through holes that communicate with the housing portion 21. Of side faces of the frame body 20, the side face in which the apertures 23 and 24 are provided is preferably the side face 22a, which is disposed on the left side of the vehicle, or a side face 22b disposed on the right side.

The apertures 23 and 24 encompass a first aperture 23, for inserting at least one heating heat exchanger 5A or 5B in the housing portion 21, and a second aperture 24 for inserting at least one heating heat exchanger 5B other than the heating heat exchanger 5A inserted through the first aperture 23. Forms of the first aperture 23 and the second aperture 24 preferably coincide one each with the forms of the side faces of the inserted heating heat exchangers 5A and 5B opposing in the direction of insertion in the frame body 20, and more preferably, coalesce with or are similar to the forms of the side faces of the heating heat exchangers 5A and 5B. When the forms of the first aperture 23 and the second aperture 24 are similar to the forms of the side faces of the heating heat exchangers 5A and 5B, sizes of the first aperture 23 and the second aperture 24 with respect to sizes of the side faces are preferably sizes of an extent such that the heating heat exchangers 5A and 5B can be held. More preferably, for example, areas of the first aperture 23 and the second aperture 24 exceed 100%, and are equal to or less than 110%, with respect to areas of the side faces of the heating heat exchangers 5A and 5B.

The multiple of apertures 23 and 24 may be provided in the same side face 22a as each other (shown in Fig. 1), or provided in different side faces from each other (not shown) . When the multiple of apertures 23 and 24 are provided in the same side face 22a as each other, the side face is preferably the side face 22a disposed on the first installation/removal port 12 side of the case 10. Routing of piping or wiring to the heating heat exchangers can be carried out through the first installation/removal port 12, and maintainability improves further. When the multiple of apertures 23 and 24 are provided in different side faces from each other, the different side faces are preferably the side face 22a on the rear side in the direction of insertion of the frame body 20 in the case 10 (the side face disposed on the first installation/removal port 12 side of the case 10) and the side face 22b on the front side in the direction of insertion of the frame body 20 in the case 10. For example, when a heating heat exchanger has a collar portion 7, as does the electrical heat generating type heating heat exchanger 5B shown in Fig. 1, the heating heat exchangers 5A and 5B need to be disposed separated by an interval equivalent to the collar portion 7 when attempting to insert the heating heat exchangers 5A and 5B into the frame body 20 from the same direction, as in Fig. 1, but the heating heat exchangers 5A and 5B can be disposed in proximity to each other by inserting the heating heat exchangers 5A and 5B into the frame body 20 from differing directions, whereby the case 10 can be further reduced in size. Also, when inserting the heating heat exchangers 5A and 5B from differing directions in the case 10 without using the frame body 20, there is a problem in that installation and removal of the multiple of heating heat exchangers 5A and 5B is carried out from a multiple of directions, and maintainability deteriorates, but in the embodiment, the multiple of heating heat exchangers 5A and 5B are housed in the frame body 20 in advance, because of which installation and removal can be carried out from one direction with respect to the case 10, and maintainability can be improved.

It is preferable that one of the apertures 23 and 24 is provided with respect to one of the heating heat exchangers 5A and 5B. The apertures 23 and 24 are preferably provided separately for the heating heat exchangers 5A and 5B in the frame body 20, but there may be one housing portion 21 (shown in Fig. 1), or the housing portion 21 may be divided into a multiple in accordance with the apertures 23 and 24 (not shown) . Even when the housing portion 21 is divided into a multiple, there is one frame body 20.

The vehicle-use air conditioning device according to the embodiment is such that the heating heat exchangers 5A and 5B need not be housed in one portion of the housing portion 21, and the apertures 23 and 24 of the housing portion 21 may be blocked by a cover body. For example, an aspect may be such that only one of the heating heat exchangers 5A and 5B is disposed, and one portion of the housing portion 21 is used in an empty state. Even when quantities of the installed heating heat exchangers 5A and 5B differ, the case 10 and the frame body 20 can be used for both. One portion of the housing portion 21 refers to one portion of space of the housing portion 21 in which the heating heat exchangers 5A and 5B could be housed when a multiple of the heating heat exchangers 5A and 5B are housed in one housing portion 21, and refers to at least one housing portion of a multiple of housing portions when a multiple of the heating heat exchangers 5A and 5B are each housed in separate housing portions.

The frame body 20 preferably has means of holding the heating heat exchangers 5A and 5B. The holding means is, for example, the aperture 23, which has a form that can hold the heating heat exchanger 5A, a screw hole 25, provided in the side face 22a of the peripheral wall portion 22, for fixing the heating heat exchanger 5B, or a holding piece (not shown), protruding from an inner wall face of the peripheral wall portion 22, for holding the heating heat exchangers 5A and 5B.

The frame body 20 is inserted into the air passage 11 through the first installation/removal port 12 of the case 10 while holding the heating heat exchangers 5A and 5B, thereby being mounted in the case 10. The multiple of heating heat exchangers 5A and 5B can be simultaneously disposed in the air passage 11 by this one operation. Also, the frame body 20 is removed from the case 10 while holding the heating heat exchangers 5A and 5B. The multiple of heating heat exchangers 5A and 5B can be simultaneously removed by this one operation.

The vehicle-use air conditioning device according to the embodiment is preferably such that the case 10 has a second installation/removal port (not shown) in a side face opposing the side face 13 in which the first installation/removal port 12 is provided, the second installation/removal port has a form the same as that of the first installation/removal port 12, and the first installation/removal port 12 and the second installation/removal port are in a relationship of having planar symmetry. The frame body 20 can be installed in and removed from the case 10 through not only the first installation/removal port 12 but also the second installation/removal port, because of which the case 10 can be used in both a right-hand drive vehicle and a left-hand drive vehicle. Being in a relationship of having planar symmetry means that the first installation/removal port 12 and the second installation/removal port have planar symmetry with respect to an imaginary plane in the case 10, parallel to the side face 13 in which the first installation/removal port 12 is provided.

The side face 22a on the rear side in the direction of insertion of the frame body 20 in the case 10 preferably doubles as a side face of the case 10. A side face of the frame body 20 doubling as a side face of the case 10 indicates a state wherein a hole such as the first installation/removal port 12 of the case provided in a side face of the case 10 is blocked by the side face 22a of the frame body 20. A hole such as the first installation/removal port 12 provided in a side face of the case 10 can be more easily blocked, without preparing a separate cover or the like. Also, a sealing member (not shown) is preferably provided in a side face of the frame body 20. A hole such as the first installation/removal port 12 provided in a side face of the case 10 can be more hermetically blocked using the sealing member. An elastic member of, for example, EPDM (ethylene propylene diene monomer) or NBR (nitrile butadiene rubber) is used as the sealing member. Also, the sealing member is preferably mounted in or bonded to the frame body 20 in advance. A hole such as the first installation/removal port 12 provided in a side face of the case 10 can be blocked simultaneously with the frame body 20 being mounted in the case 10.

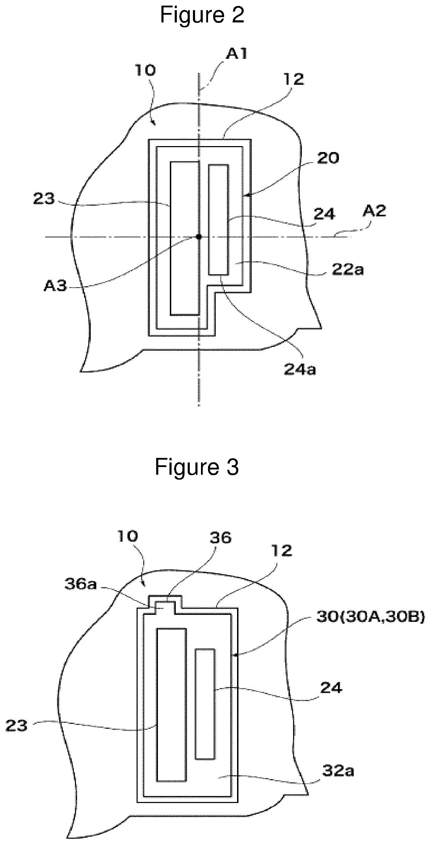

Fig. 2 is a schematic view showing a first example of an installation/removal port of a frame body and a case. A form of at least either one side face 22a or 22b of side faces opposing in the direction of installation in and removal from the case 10 of the frame body 20 coincides with the form of the first installation/removal port 12, and is asymmetrical in directions of rotation having the up-down direction of the case 10, the front-rear direction of the case 10, and the left-right direction of the case 10 as axes. The side face opposing in the direction of installation in and removal from the case 10 of the frame body 20 is the side face 22a on the rear side in the direction of insertion of the frame body 20 in the case 10 or the side face 22b on the front side in the direction of insertion of the frame body 20 in the case 10, as shown in Fig. 1. Of these, the side face or faces that coincide with the form of the first installation/removal port 12, and are asymmetrical in directions of rotation having the up-down, the front-rear, and the left-right directions of the case 10 as axes, may be both the side face 22a on the rear side in the direction of insertion and the side face 22b on the front side in the direction of insertion (shown in Fig. 1), only the side face 22a on the rear side in the direction of insertion (not shown), or only the side face 22b on the front side in the direction of insertion (not shown). The embodiment is preferably such that at least the side face 22a on the rear side in the direction of insertion of the frame body 20 in the case 10 coincides with the form of the first installation/removal port 12. Because of this, the first installation/removal port 12 can be blocked by the frame body 20. Also, when only the side face 22b on the front side in the direction of insertion of the frame body 20 in the case 10 coincides with the form of the first installation/removal port 12, a configuration is preferably such that, for example, the first installation/removal port 12 is blocked by a dedicated blocking member (not shown) that blocks the first installation/removal port 12 being attached to the case 10.

A vehicle-use air conditioning device according to the embodiment is preferably such that either one of the side faces 22a opposing in the direction of installation in and removal from the case 10 of the frame body 20 has the multiple of apertures 23 and 24 for housing each of the heating heat exchangers 5A and 5B in the housing portion 21, and has a form that encloses the whole of the multiple of apertures 23 and 24, as shown in Fig. 2. The frame body 20 can be further reduced in size, and an aperture area of the first installation/removal port 12 of the case 10 can be reduced. As side faces 22a opposing in the direction of installation in and removal from the case 10 of the frame body 20, there are the side face 22a on the rear side in the direction of insertion of the frame body 20 in the case 10 and the side face 22b on the front side in the direction of insertion of the frame body 20 in the case 10, as shown in Fig. 1. Of these, preferably, the form of at least the side face 22a on the rear side in the direction of insertion of the frame body 20 in the case 10 is a form that encloses the whole of the multiple of apertures 23 and 24, and more preferably, both the form of the side face 22a on the rear side in the direction of insertion of the frame body 20 in the case 10 and the form of the side face 22b on the front side in the direction of insertion of the frame body 20 in the case 10 are forms that enclose the whole of the multiple of apertures 23 and 24. A form that encloses the whole of the multiple of apertures 23 and 24 is preferably a form that follows an external form of the aligned apertures 23 and 24. For example, in Fig. 2, the form of the side face 22a of the frame body 20 is a form such that one corner of a rectangle is recessed to an inner side so as to follow a peripheral edge 24a of the aperture 24. An outer edge of the side face 22a of the frame body 20 follows peripheral edges of the aligned multiple of apertures 23 and 24, whereby the frame body 20 can be further reduced in size. Also, when the multiple of apertures 23 and 24 are provided in different side faces from each other, a form that encloses the whole of the multiple of apertures 23 and 24 is set as follows. For example, when the frame body 20 shown in Fig. 1 is such that the one aperture 23 is provided in the side face 22a and the other aperture 24 is provided in the side face 22b opposing the side face 22a (not shown), a form that encloses the whole of the multiple of apertures is a form that encloses a projected portion, wherein the aperture 24 provided in the other side face 22b is projected onto the one side face 22a, and the aperture 23 provided in the one side face 22a.

As the form of the side face 22a on the rear side in the direction of insertion of the frame body 20 in the case 10 corresponds to the form of the first installation/removal port 12, whether installation of the frame body 20 in the case 10 is appropriate or not can easily be confirmed visually. Also, the first installation/removal port 12 can be blocked by the side face 22a of the frame body 20. In the specification, forms coinciding encompasses a form wherein forms coalesce with each other, or a form wherein forms are similar to each other. For example, the form of the first installation/removal port 12 is preferably a similar form slightly larger than the form of the side face 22a of the frame body 20, as shown in Fig. 2, and a sealing member (not shown) is fitted between an inner peripheral edge of the first installation/removal port 12 and the side face 22a of the frame body 20. For example, when the form of the side face 22a of the frame body 20 and the form of the first installation/removal port 12 are similar, the area of the first installation/removal port 12 preferably exceeds 100%, and is equal to or less than 110%, with respect to an area of the side face 22a of the frame body 20.

As the form of the side face 22a on the rear side in the direction of insertion of the frame body 20 in the case 10 is asymmetrical in a direction of rotation having the up-down direction of the case 10 as an axis A1, erroneous installation on the front side in the direction of insertion of the frame body 20 in the case 10 can be prevented. The up-down direction of the case 10 is preferably an up-down direction of a vehicle, as shown in Fig. 1.

As the form of the side face 22a on the rear side in the direction of insertion of the frame body 20 in the case 10 is asymmetrical in a direction of rotation having the front-rear direction of the case 10 as an axis A2, erroneous vertical installation in the direction of insertion of the frame body 20 in the case 10 can be prevented. The front-rear direction of the case 10 is preferably a front-rear direction of a vehicle, as shown in Fig. 1.

As the form of the side face 22a on the rear side in the direction of insertion of the frame body 20 in the case 10 is asymmetrical in a direction of rotation having the left-right direction of the case 10 as an axis A3, erroneous vertical and horizontal installation in the direction of insertion of the frame body 20 in the case 10 can be prevented. The left-right direction of the case 10 is preferably a left-right direction of a vehicle, as shown in Fig. 1.

A form wherein the direction of insertion of the frame body 20 in the case 10 is a direction heading from a left side of a vehicle to a right side is shown as an example in Fig. 1, but the invention not being limited to this, the direction of insertion of the frame body 20 in the case 10 may be, for example, a direction heading from the right side of the vehicle to the left side (not shown) . When the direction of insertion of the frame body 20 in the case 10 is the direction heading from the left side of the vehicle to the right side, as shown in Fig. 1, the side face 22a on the rear side in the direction of insertion of the frame body 20 in the case 10 is, of the side faces of the frame body 20, the side face 22a disposed on the left side of the vehicle. Also, when the direction of insertion of the frame body 20 in the case 10 is the direction heading from the right side of the vehicle to the left side (not shown), the side face on the rear side in the direction of insertion of the frame body 20 in the case 10 is, of the side faces of the frame body 20, the side face 22b disposed on the left side of the vehicle.

The form of the side face 22b on the front side in the direction of insertion of the frame body 20 in the case 10, not being particularly limited, preferably coincides with the form of the installation/removal port 12, and is asymmetrical in directions of rotation having the up-down direction of the case 10, the front-rear direction of the case 10, and the left-right direction of the case 10 as axes, in the same way as the side face 22a on the rear side in the direction of insertion.

Examples of modifications of the form of the side face 22a on the rear side in the direction of insertion of the frame body 20 in the case 10 will be described with reference to Fig. 3 to Fig. 6.

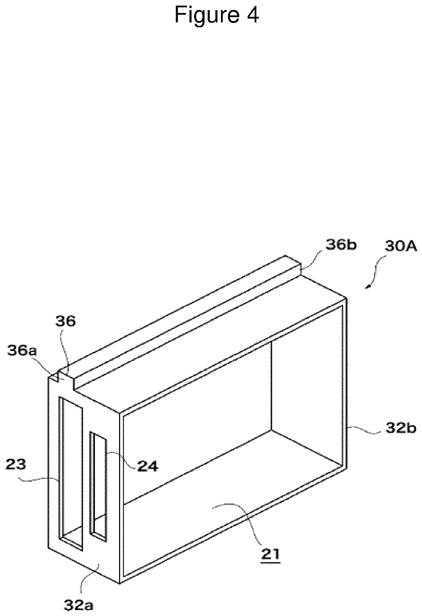

Fig. 3 is a schematic view showing a second example of an installation/removal port of a frame body and a case. Fig. 4 is a perspective view showing an example of the frame body shown in Fig. 3. A vehicle-use air conditioning device according to the embodiment is preferably such that a frame body 30 (30A or 30B) has a first ridge portion 36 on a side face extending in a direction of installation in and removal from the case 10, and one end face 36a of the first ridge portion 36 is above, of side faces 32a and 32b opposing in the direction of installation in and removal from the case 10 of the frame body 30 (30A or 30B), the side face 32a on the rear side in the direction of insertion in the case 10. A form of the first ridge portion 36, not being particularly limited, is, for example, a quadrangular prism form (shown in Fig. 4), a triangular prism form (not shown), or a circular prism form (not shown). The end face 36a of the first ridge portion 36 being above the side face 32a on the rear side in the direction of insertion in the case 10 means that the end face 36a of the first ridge portion 36 and the side face 32a on the rear side in the direction of insertion in the case 10 are in the same plane. As the end face 36a of the first ridge portion 36 is above the side face 32a on the rear side in the direction of insertion in the case 10, the first installation/removal port 12 can be blocked by the side face 32a of the frame body 30. Also, whether installation of the frame body 30 in the case 10 is appropriate or not can easily be confirmed visually.

A vehicle-use air conditioning device according to the embodiment is preferably such that another end face 36b of the first ridge portion 36 is above, of the side faces 32a and 32b opposing in the direction of installation in and removal from the case 10 of the frame body 30, the side face 32b on the front side in the direction of insertion in the case 10, as shown in Fig. 4. That is, the first ridge portion 36 extends over the whole of the frame body 30 in the direction of installation in and removal from the case 10. The end face 36b of the first ridge portion 36 being above the side face 32b on the front side in the direction of insertion in the case 10 means that the end face 36b of the first ridge portion 36 and the side face 32b on the front side in the direction of insertion in the case 10 are in the same plane. As the end face 36b of the first ridge portion 36 is above the side face 32b on the front side in the direction of insertion in the case 10, an appropriate installation orientation of the frame body 30 can be confirmed at an initial step of an operation of inserting the frame body 30 in the case 10.

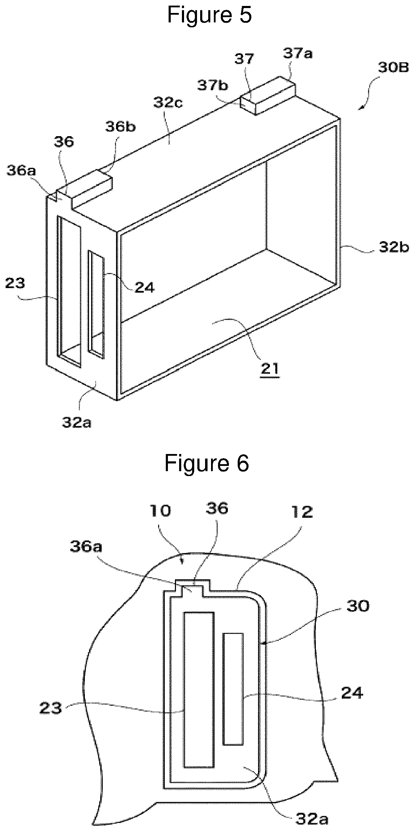

Fig. 5 is a perspective view showing another example of the frame body shown in Fig. 3. A vehicle-use air conditioning device according to the embodiment is preferably such that the other end face 36b of the first ridge portion 36 is between the two side faces 32a and 32b opposing in the direction of installation in and removal from the case 10 of the frame body 30, the frame body 30 further has a second ridge portion 37 on a side face 32c on which the first ridge portion 36 is provided, and one end face 37a of the second ridge portion 37 is above, of the side faces 32a and 32b opposing in the direction of installation in and removal from the case 10 of the frame body 30, the side face 32b on the front side in the direction of insertion in the case 10, as shown in Fig. 5. A form of the second ridge portion 37 is preferably the same as the form of the first ridge portion 36. Another end face 37b of the second ridge portion 37 is between the two side faces 32a and 32b opposing in the direction of installation in and removal from the case 10 of the frame body 30. The end face 37a of the second ridge portion 37 being above the side face 32b on the front side in the direction of insertion in the case 10 means that the end face 37a of the second ridge portion 37 and the side face 32b on the front side in the direction of insertion in the case 10 are in the same plane. As the end face 37a of the second ridge portion 37 is above the side face 32b on the front side in the direction of insertion in the case 10, an appropriate installation orientation of the frame body 30 can be confirmed at an initial step of an operation of inserting the frame body 30 in the case 10.

A configuration wherein the frame body 30 has both the first ridge portion 36 and the second ridge portion 37 is shown in Fig. 5, but as another example, a configuration wherein the frame body 30 has only the second ridge portion 37, without having the first ridge portion 36, may be adopted (not shown) . As the end face 37a of the second ridge portion 37 is above the side face 32b on the front side in the direction of insertion in the case 10, an appropriate installation orientation of the frame body 30 can be confirmed at an initial step of an operation of inserting the frame body 30 in the case 10.

Fig. 6 is a schematic view showing a third example of an installation/removal port of a frame body and a case. A form of the side face 32a on the rear side in the direction of insertion of the frame body 30 in the case 10 may be, for example, a form such that at least one corner is rounded, as shown in Fig. 6.

The kind of first ridge portion 36 and/or second ridge portion 37 shown in Fig. 4 or Fig. 5 may be further provided to the form wherein either one of the side faces 22a opposing in the direction of installation in and removal from the case 10 of the frame body 20 has a form that encloses the whole of the multiple of apertures 23 and 24, as shown in Fig. 2.

A configuration wherein blocking of the installation/removal port 12 after the frame body 20 or 30 is inserted in the air passage 11 through the installation/removal port 12 is achieved using the inner peripheral edge of the installation/removal port 12, the side face 22a or 32a on the rear side in the direction of insertion of the frame body 20 or 30 in the case 10, and a sealing member (not shown) provided between the inner peripheral edge and the side face 22a or 32a, has been shown, but the invention is not limited to this. For example, a form wherein the installation/removal port 12 is blocked using a blocking member (not shown) separate from the frame body 20 or 30 after the frame body 20 or 30 is inserted in the air passage 11 through the installation/removal port 12 is not excluded by the invention.

### Reference Signs List

1 Vehicle-use air conditioning device
2 Blower unit
3 Cooler unit
4 Heater unit
5A, 5B Heating heat exchanger
5A Hot water type heating heat exchanger
5B Electrical heat generating type heating heat exchanger
6 Cooling heat exchanger
10 Case
11 Air passage
12 Installation/removal port (first installation/removal port)
13 Case side face
20 Frame body
21 Housing portion
22 Peripheral wall portion
22a, 22b Frame body side face
23 Aperture (first aperture)
24 Aperture (second aperture)
24a Aperture peripheral edge
30 (30A, 30B) Frame body
32a, 32b, 32c Frame body side face
36 First ridge portion
36a, 36b First ridge portion end face
37 Second ridge portion
37a, 37b Second ridge portion end face
A1 Case up-down direction axis of rotation
A2 Case front-rear direction axis of rotation
A3 Case left-right direction axis of rotation

## Claims

1. A vehicle-use air conditioning device, comprising:
a case (10) having in an interior thereof an air passage (11) along which an airflow is caused to flow; and
a multiple of heating heat exchangers (5A, 5B) disposed in series with respect to the airflow, wherein
the heating heat exchangers (5A, 5B) are housed in a housing portion (21) provided in one frame body (20),
the case (10) has an installation/removal port (12) for installing and removing the frame body (20) in a side face of the case (10),
the frame body (20) can be freely installed in and removed from the case (10) while holding the heating heat exchangers (5A, 5B), and
a form of at least either one side face (22a, 22b) of side faces opposing in a direction of installation in and removal from the case (10) of the frame body (20) coincides with a form of the installation/removal port (12), and is asymmetrical in directions of rotation having an up-down direction of the case (10), a front-rear direction of the case (10), and a left-right direction of the case (10) as axes.

2. The vehicle-use air conditioning device according to claim 1, wherein the multiple of heating heat exchangers (5A, 5B) are such that forms of side faces of the heating heat exchangers (5A, 5B) opposing in a direction of insertion in the frame body (20) differ from each other.

3. The vehicle-use air conditioning device according to claim 1 or 2, wherein either one of the side faces (22a, 22b) opposing in the direction of installation in and removal from the case (10) of the frame body (20) has a multiple of apertures (23, 24) for housing each of the heating heat exchangers (5A, 5B) in the housing portion (21), and has a form that encloses a whole of the multiple of apertures (23, 24).

4. The vehicle-use air conditioning device according to any one of claims 1 to 3, wherein the frame body (30, 30A, 30B) has a first ridge portion (36) on a side face extending in a direction of installation in and removal from the case (10), and one end face (36a) of the first ridge portion (36) is above, of side faces (32a, 32b) opposing in the direction of installation in and removal from the case (10) of the frame body (30, 30A, 30B), the side face (32a) on a rear side in the direction of insertion in the case (10).

5. The vehicle-use air conditioning device according to claim 4, wherein another end face (36b) of the first ridge portion (36) is above, of the side faces (32a, 32b) opposing in the direction of installation in and removal from the case (10) of the frame body (30), the side face (32b) on a front side in the direction of insertion in the case (10).

6. The vehicle-use air conditioning device according to claim 4, wherein the other end face (36b) of the first ridge portion (36) is between the two side faces (32a, 32b) opposing in the direction of installation in and removal from the case (10) of the frame body (30),
the frame body (30) further has a second ridge portion (37) on a side face (32c) on which the first ridge portion (36) is provided, and one end face (37a) of the second ridge portion (37) is above, of the side faces (32a, 32b) opposing in the direction of installation in and removal from the case (10) of the frame body (30), the side face (32b) on the front side in the direction of insertion in the case (10).

7. The vehicle-use air conditioning device according to any one of claims 1 to 3, wherein the frame body (30, 30A, 30B) has a second ridge portion (37) on a side face extending in a direction of installation in and removal from the case (10), and another end face (37b) of the second ridge portion (37) is above, of side faces (32a, 32b) opposing in the direction of installation in and removal from the case (10) of the frame body (30, 30A, 30B), the side face (32b) on a front side in the direction of insertion in the case (10).

8. The vehicle-use air conditioning device according to any one of claims 1 to 7, wherein the heating heat exchangers (5A, 5B) are not housed in one portion of the housing portion (21), and the aperture (23, 24) of the housing portion (21) is blocked by a cover body.

9. A frame body applied to the vehicle-use air conditioning device (1) according to any one of claims 1 to 8.
